# EUROPEAN PATENT APPLICATION

(11) **EP 1 286 290 A1**
(43) Date of publication of application: **26.02.2003**
(21) Application number: 02018286.1
(22) Date of filing: 23.08.2002
(51) Int. Cl.: G06F 17/60

(54) **Secure tax meter for internet and/or catalog sales**

(30) Priority: 23.08.2001 US 938326
(71) Applicant: PITNEY BOWES INC., Stamford, Connecticut 06926-0700 (US)
(72) Inventor: Ryan, Frederick W., Jr., Oxford, Connecticut 06748 (US); Stelman, Vadim L., Trumbull, Connecticut 06611 (US)
(74) Representative: HOFFMANN - EITLE

(57) **Abstract**

A method for collecting sales and/or use taxes an remote sales, said method includes the steps of:
a) collecting by sellers information regarding remote sales made by buyers;
b) calculating by sellers securely the correct taxing jurisdictions sales and/or use tax to be paid by buyers for remote sales;
c) collecting by sellers from buyers the correct sales and/or use tax;
d) transmitting by a seller to a taxing jurisdiction the aggregate totals of sales and use tax transactions; and
e) paying by a seller to a taxing jurisdiction the correct sales and/or use tax received by sellers.

## Description

Reference is made to commonly assigned co-pending patent application Serial Number 09/938,158 filed August 23, 2001 entitled "Secure Tax Meter And Certified Service Provider Center For Collecting Sales And/Or Use Taxes On Sales That Are Made Via The Internet And/Or Catalog" in the names of Frederick W. Ryan, Jr. and Vadim Stelman; and to commonly assigned co-pending patent application Serial No. 09/634,040 filed August 8, 2000 entitled "A Method For Obtaining Secure Receipts For Sales and/or Use Taxes That Are Made Via The Internet and/or Catalog" in the name of Frederick W. Ryan, Jr.; and to commonly assigned co-pending patent application Serial No. 09/634,041 filed August 8, 2000, entitled "A Method For Collecting Sales and/or Use Taxes That Are Made Via The Internet and/or Catalog" in the names of Frederick W. Ryan, Jr., Michael W. Wilson, Vadim L. Stelman, Ronald P. Sansone, Theresa Biasi, and Kathleen A. Bishop.

This invention pertains to commercial transactions and, more particularly, to the collection of taxes for the sale and/or use of goods and/or services.

From the dawn of history to the present day, governments have collected taxes to pay for their government expenditures. One type of tax levied by governments is tax on the sale and/or use of goods and/or services. "Sales taxes" are usually imposed at a certain percent of the receipts from every retail sale of tangible personal property made in the taxing jurisdiction. "Use taxes" are usually imposed on the use of tangible personal property or taxable services within the taxing jurisdiction.

Currently in the United States, some cities, states, counties, districts, and boroughs collect sales and/or uses taxes on commercial transactions that take place in their jurisdictions. In fact, there are approximately 6,000 jurisdictions in the United States collecting sales and/or use taxes. The sales and/or use taxes are at many different rates and apply to different types of goods and/or services. For instance, the sales tax on clothing may be exempt from taxation in one jurisdiction and subject to taxation in another jurisdiction at a rate of 6% for all clothing sales over $100.00. The sales tax may also be based upon the amount of the substance that is contained in the product, i.e., juices having different amounts of concentrates are taxed at different rates in some jurisdictions. Some entities, like charities. Indian tribes, etc. may be subject to taxation in one jurisdiction and not in another.

Generally, a jurisdiction has the right or power to tax a commercial transaction if the commercial transaction takes place within the taxing jurisdiction, i.e., goods subject to a sales tax are sold by a store that is physically located within the taxing jurisdiction. Goods subject to a use tax are goods that are used, consumed or stored in the taxing jurisdiction. The taxing jurisdictions usually have no difficulty collecting sales taxes on sales in their taxing jurisdiction made by merchants physically located in the taxing jurisdiction. A buyer is responsible for the payment of the tax if the seller does not collect the tax. However, the taxing jurisdictions usually find it difficult to collect taxes on the sale and/or use of goods and/or services that are made in a different jurisdiction and delivered and/or performed in the taxing jurisdiction. There has been a tremendous increase in the number of commercial transactions that are or may be subject to a sales and/or use tax that are taking place over the Internet or from catalogs. The taxing jurisdictions are having difficulty collecting sales and/or use taxes that are made via the Internet and catalogs.

Currently, sellers of goods and/or services have difficulty complying with the sales and/or use tax, government-mandated seller administrative functions. Sales tax administrative functions include determination and calculation of the amount of tax due, collection of the tax, remittance of the tax, and filing reports of the tax to the appropriate governmental agency. The seller of the goods/and or services also has to maintain adequate records since the government may audit the seller.

In some existing tax collection systems, a representative of a taxing jurisdiction must physically visit a seller in order to audit the seller, As a result, the seller, to some degree, can control the amount of information and content of information to which any given taxing jurisdiction has access. For example, a seller may not show the taxing jurisdiction all of the relevant information, or the taxing jurisdiction may view information that it is not entitled to view.

In other existing tax collection systems, an agent provides an online service that performs the sales tax administration functions of a seller, thereby relieving the seller of a portion of the tax compliance burden. However, some sellers are uneasy about relying upon an agent as an integral part of their sales tax transaction processing and providing the agent with a significant amount of transaction detail e.g., customer addresses. Sellers would prefer to control all aspects of their transaction processing, including tax compliance. Taxing jurisdictions are concerned that sellers might modify their tax compliance systems and defraud the taxing jurisdictions. Therefore, the taxing jurisdictions would prefer that a trusted third party (which the States could more easily audit) be responsible for tax calculation and collection.

This invention overcomes the disadvantages of the prior art by providing a system and method that removes sellers' objections to some existing system by enabling sellers to control all aspects of their transaction and customer data, while still providing taxing jurisdictions with the assurance that sales and use taxes are being accounted for and calculated properly. This is accomplished by placing the tax calculation and accounting functions at the seller site, executed by a secure tax meter, i.e., a tamper-resistant computing environment.

The secure tax meter also achieves the taxing jurisdictions' goals of increased assurance of correct tax calculation, increased retailer compliance and decreased taxing jurisdiction audit burden. The placing of a secure tax meter at a seller's site and having the secure tax meter communicate directly with each taxing jurisdiction effectively eliminates the agent data center operation.

The secure tax meter calculates the tax rate for each transaction, securely maintains a record of all transactions, securely maintains an aggregate of all transactions for each tax jurisdiction, enables the taxing jurisdictions to remotely audit detailed transaction records, provides the taxing jurisdictions a mechanism to update tax rate tables, enables the taxing jurisdictions to communicate directly with the sellers and the sellers' financial institutions. Thus, the secure tax meter performs the sales tax administrative functions for the seller, relieving the seller of as much of the burden of compliance as possible.

The secure tax meter may also be used to detect improper or fraudulent behavior by the seller. For instance, the secure tax meter may be used to detect partial reporting of taxes to the taxing jurisdiction for seller's sales and/or the failure to report seller's sales to the taxing jurisdiction. The secure tax meter also may be able to obtain evidence of improper seller conduct in the reporting and/or collecting of sales and/or use taxes.
Fig. 1 is a drawing of a Streamlined Sales and Use Tax System that utilizes a secure tax meter;
Fig. 2 is a drawing of a secure tax meter;
Fig. 3 is a drawing showing the transaction flow of the system described in Fig. 1;
Fig. 4 is a drawing describing the process shown in Fig. 3; and
Fig. 5 is a flow chart showing how a taxing jurisdiction may detect fraud and obtain evidence regarding fraudulent transactions.

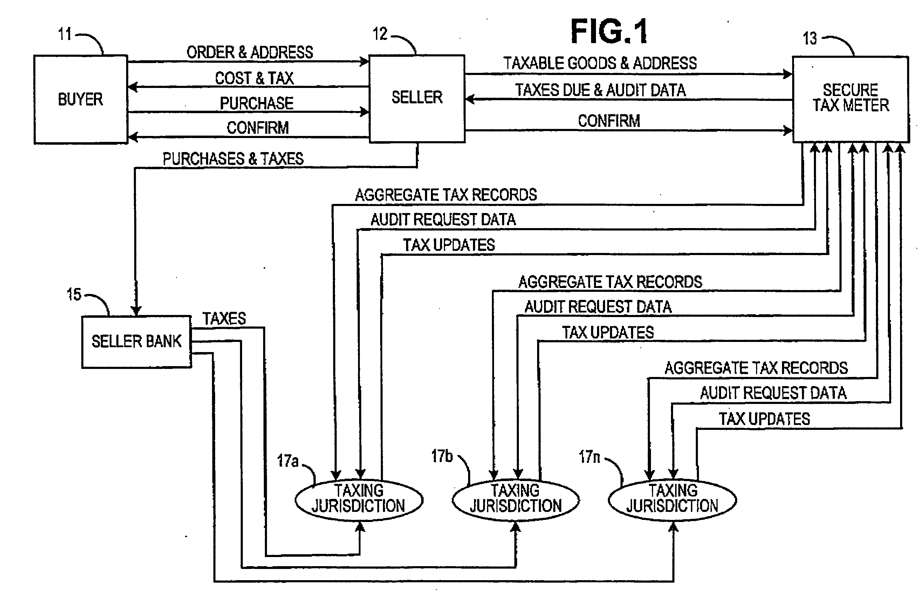

Referring now to the drawings in detail, and more particularly to Fig. 1, the reference character 11 represents a plurality of buyers who purchase goods and/or services from a plurality of sellers 12. The remote sale may be via the Internet and/or catalog, etc. The information exchanged between buyer 11 and seller 12 and seller 12 and buyer 11 may be the particulars of the sales order and/or service; the location of the buyer; the cost of the sales order and/or service, including any sales or use tax that may be due; confirmation of the order by buyer 11; and acceptance of the order by seller 12. It will be obvious to one skilled in the art that buyer 11 and seller 12 may transmit other information, i.e., more specific location information, buyer exemption information, buyer unique identifier, buyer identification number, etc. Seller 12 may transmit the location of buyer 11, the items and/or services to be purchased by buyer 11, the classification of the items and/or services to be purchased by buyer 11, and the cost of the items and/or services purchased by buyer 11 to Secure Tax Meter 13 ("Meter 13").

Each seller 12 will have a Meter 13 located at their site. The seller's site may be a physical site or be hosted by an Internet service provider or an e-commerce service provider such as an Internet mall. Seller 12 receives from Meter 13 the amount of taxes due on the sale. Meter 13 has been certified by the taxing jurisdictions and must comply with the taxing jurisdiction's rules and regulations to maintain its certification. Meter 13 maintains a log of all sales and/or use tax transactions. Meter 13 transmits the aggregate tax records, i.e., a log of all sales and/or use tax transactions to taxing jurisdictions 17a, 17b...17n. Taxing jurisdictions 17a,17b...17n transmit updates of sales and use tax tables to Meter 13. Meter 13 calculates and logs the tax and transmits the amount of taxes that are due to seller 12. Meter 13 also verifies the integrity of its tax tables and digitally signs all tax transactions. The tax calculation performed by meter 13 may be executed by the sales tax software sold by Taxware International, Inc. of 27 Congress Street, Salem, MA 01970, or the sales tax software sold by Vertex, Inc., of 1041 Old Cassat Road, Berwyn, Pennsylvania 19312, or other similar software and/or system. Meter 13 has been certified by the taxing jurisdictions and must comply with the taxing jurisdiction's rules and regulations to maintain its certification.

Periodically, seller 12 will transmit the monies it receives from buyer 11 to seller bank 15. Bank 15 will periodically send the taxes that are due to taxing jurisdictions 17a, 17b,...n. Meter 13 will provide encrypted audit data to each taxing jurisdiction 17a, 17b,...17n upon a request from taxing jurisdictions 17a, 17b,...17n.

Meter 13 will set up tax record databases for each seller 12 in each taxing jurisdiction 17a, 17b,...17n. Meter 13 will aggregate the payments that are due to taxing jurisdictions 17a, 17b,...17n, prepare documentation, (tax returns) for taxing jurisdictions 17a, 17b,...17n submit documentation to taxing jurisdictions 17a, 17b,...17n, submit tax revenues to jurisdictions 17a, 17b,...17n and enable taxing jurisdictions 17a, 17b,...17n to remotely audit buyer 11. Meter 13 can restrict taxing jurisdictions' 17a, 17b,...17n access to data while still enabling complete disclosure of information in the support of tax audits. This is accomplished by supplying aggregate tax information to each taxing jurisdictions 17a, 17b,...17n.

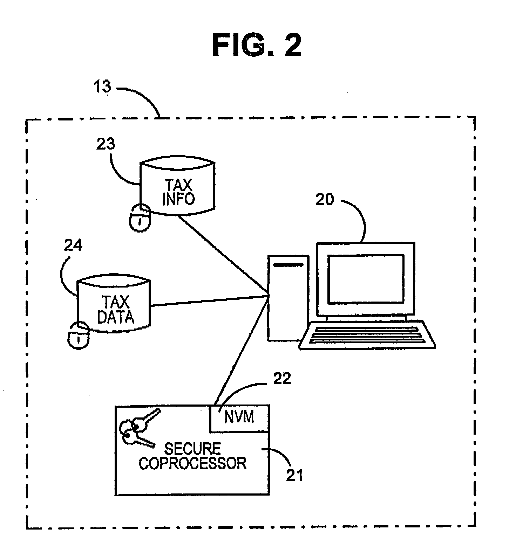

Taxing jurisdictions 17a, 17b,...17n are restricted from viewing each other's data in tax data database 24 (Fig. 2). Taxing jurisdictions 17a, 17b,...17n could audit seller tax record databases and tax return information based upon seller ID number, A seller's identity would be disclosed to a taxing jurisdiction 17a, 17b,...17n only if there were sufficient suspicion of fraud based upon audit data. The foregoing may also be done for buyers 11.

A seller 12 may view the contents of his/her seller tax record database 24 (Fig. 2). A seller tax record database 24 contains an aggregate record of transactions the seller has conducted, a record of all tax returns filed by the seller 12, a record of all financial transactions with the seller 12, and a record of audits performed by taxing jurisdictions 17a, 17b,...17n. Seller tax record database 24 may also contain a record of all transactions the seller has conducted.

Meter 13 is certified by taxing jurisdictions 17a, 17b,...17n. Meter 13 determines the total amount of taxes due to each taxing jurisdiction; initiates tax payment (either directly or by instructing the seller) to taxing jurisdictions 17a, 17b,...17n; and files tax returns with taxing jurisdictions 17a, 17b,...17n on behalf of seller 12. Meter 13 also allows taxing jurisdictions 17a, 17b,...17n to audit seller 12.

Fig. 2 is a drawing of a secure tax meter 13 ("Meter 13"). Meter 13 comprises a host computer 20 that is coupled to a secure coprocessor 21 containing a nonvolatile memory 22; a secure tax information database 23; and a secure tax database 24. Computer 20 functions as a communication interface between databases 23 and 24, secure coprocessor 21, and other seller systems. Secure coprocessor 21, preferably, is responsible for the security and accuracy of tax calculation and accounting. Secure coprocessor 21 is a tamper-resistant module, i.e., the IBM 4758 Cryptocard, in order to ensure that the seller is not able to tamper with the tax calculation and accounting functions. Secure coprocessor 21 contains Non-Volatile Memory (NVM) 22 that is used to store security parameters, configuration data and aggregate tax totals. The security parameters include such items as secure coprocessor serial number, expiration date of the secure coprocessor, cryptographic keys, etc. The configuration data includes such items as tax jurisdiction liability, taxing jurisdiction bank account numbers, seller identification number, seller unique identifier, frequency of contact with CSP, etc. Aggregate tax totals are maintained in secure coprocessor 21 for each taxing jurisdiction. Each aggregate total represents all the taxes due to all the tax jurisdictions within a particular state. These totals are maintained within secure coprocessor 21 to protect them from unauthorized modification. The total tax collected for each jurisdiction may be maintained optionally in secure coprocessor 21; however, this data also may be extracted from the tax data database 24.

The tax information database 23 contains information necessary to calculate taxes due on a sale. Tax information database 23 contains item classifications, tax rates, tax-exempt information, tax regulations, etc. Tax information database 23 must be protected against modification to ensure that a seller does not change tax rates, exemption information, tax rules and the like. This protection is accomplished by having taxing jurisdictions 17a, 17b,...17n (Fig. 1) digitally sign or otherwise cryptographically protect the database (for example, using the Digital Signature Algorithm (DSA) described in FIPS PUB 186, dated January 15, 1977, and published by the United States Department Of Commerce, National Bureau of Standards, herein incorporated by reference).

The secure coprocessor 21 verifies the digital signature of the tax information database 23 (or portions of tax information database 23) prior to processing transactions to ensure that tax information database 23 has not been modified.

Tax data database 24 contains a log of all transactions processed by secure coprocessor 21. Each entry in this log is digitally signed by secure coprocessor 21 to ensure that any modification of a log entry is detectable. The log also may be encrypted to protect the privacy of the information (e.g., seller addresses and individual transactions) from computer operators and administrators (this might be particularly useful if a seller's e-commerce system has been outsourced and is being operated by a third party). However, the seller may desire to analyze or process the data contained in the log (e.g., to determine the most effective means of advertising in a given area based upon the total amount of business in that area). The system allows this type of processing, since any attempted modification of tax data database 24 is detectable using a combination of digital signature verification and data analysis (using the aggregate totals or other data stored in secure coprocessor 21 to determine if log entries have been deleted). It should also be noted that while a taxing jurisdiction may have the right to audit tax data in tax data database 24, there is no need to provide the taxing jurisdictions 17a, 17b,...17n with details of every transaction (as will hereinafter be described). As a result, meter 13 allows sellers to maintain control of their sensitive data.

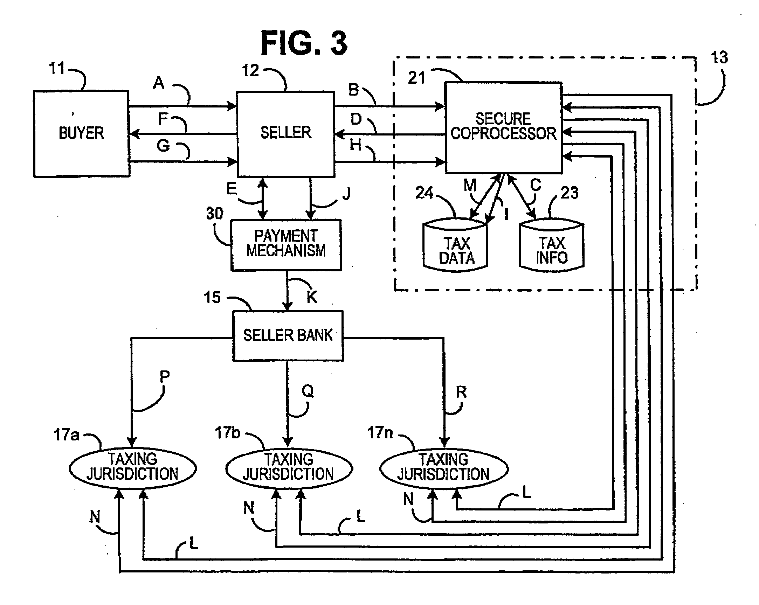

Fig. 3 is a drawing showing the transaction flow of the system described in Fig. 1. The transaction begins when buyer 11 requests to purchase goods and/or services from seller 12 via A. It will be understood that all communications may be securely transmitted, i.e., by using a secure protocol such as a secure socket layer (SSL), etc. Then seller 12 collects buyer information, including tax data, i.e., location, exemption status, from buyer 11. Seller 12 sends itemized purchase and buyer tax information to secure coprocessor 21 via connection B. Then secure coprocessor 21 verifies the integrity of tax information database 23 by performing a digital signature verification. After verification of the digital signature, secure coprocessor 21 retrieves appropriate tax rates from tax information database 23 via C, Now secure coprocessor 21 calculates the applicable taxes that are due. At this point secure coprocessor 21 sends the result of the tax calculation to buyer 12 via D. If necessary, seller 12 verifies payment availability (e.g., credit card approval, line of credit check, etc.) from payment mechanism 30 via E. Then seller 12 presents a finalized statement to buyer 11 and requests confirmation of the sale via F. Then buyer 11 confirms the sale via G. Then seller 12 confirms the sale to secure coprocessor 21 via H. Secure coprocessor 21 adds all taxes that are due for the transactions conducted with seller 12 to the appropriate aggregate total, i.e., the aggregate total for a state, and stores the appropriate aggregate total in NVM 22 (Fig. 2). Secure coprocessor 21 digitally signs a transaction log entry corresponding to the details of the transaction (amount, date, taxes due, etc.) and adds the entry to tax database 24 via I. The digitally signed log entry may be provided to buyer 11 as a secure receipt. Seller 12 confirms the sale to payment mechanism 30 (credit card, line of credit, etc.) via J. Then funds for the total amount of the sale are transferred to seller bank 15 via K. Secure coprocessor 21 periodically will contact taxing jurisdictions 17a, 17b,...17n via a connection L. Taxing jurisdictions 17a, 17b,..17n interrogate secure coprocessor 21 to ensure that secure coprocessor 21 is functioning properly. If secure coprocessor 21 fails to contact taxing jurisdictions 17a, 17b,...17n within a predetermined period of time, e.g., weekly, secure processor 21 automatically "shuts down" and refuses to process any additional tax transactions until such contact has been made. If taxing jurisdictions 17a, 17b,...17n determine that secure coprocessor 21 is not functioning properly, taxing jurisdictions 17a, 17b,...17n may instruct secure coprocessor 21 to "shut down" until any problems can be resolved. Taxing jurisdictions 17a, 17b,...17n may also initiate any updates that may need to take place, i.e., revisions or tax table updates. Taxing jurisdictions 17a, 17b,...17n will also request tax data from secure coprocessor 21. Secure coprocessor 21 verifies the integrity of tax data in tax data database 24 via M using digital signature verification and by comparing the tax data with the aggregate totals stored in secure coprocessor 21.

Secure coprocessor 21 determines the total tax due to each tax jurisdiction 17a, 17b,...17n (e.g., state, county, city) based upon the transaction history obtained from the tax data database 24. The secure coprocessor 21 digitally signs the resulting tax totals for each tax jurisdiction 17a, 17b,...17n. Secure coprocessor 21 may also digitally sign other data required by certain tax jurisdictions 17a, 17b,...17n, e.g., certain states require that specific information be maintained and reported pertaining to purchases which are exempt from tax.

Taxing jurisdictions 17a, 17b,...17n periodically contact secure coprocessor 21. Secure coprocessor 21 sends the tax totals for each jurisdiction 17a, 17b,...17n to that jurisdiction via N. Each taxing jurisdiction verifies the digital signature(s). Secure coprocessor 21 sends tax returns to taxing jurisdictions 17a, 17b,...17n. Taxing jurisdictions 17a, 17b,...17n initiate EFT transfers of funds to taxing jurisdictions 17a, 17b,...17n via P, Q and R.

The use of meter 13 enables sellers to maintain control over the availability of their transaction processing system since they are not forced to rely upon a third party agent's online service for real time transaction processing. Taxing jurisdictions 17a, 17b,...17n can be assured that the above-mentioned system that has been designed to protect against tampering and/or modification is in use by a seller, As a result, sellers are not required to provide taxing jurisdictions 17a, 17b,...17n with details of every transaction processed. However, meter 13 does provide taxing jurisdictions 17a, 17b,...17n with the capability to examine detailed transaction records in cases where it might be necessary, for instance, in cases where fraud is suspected.

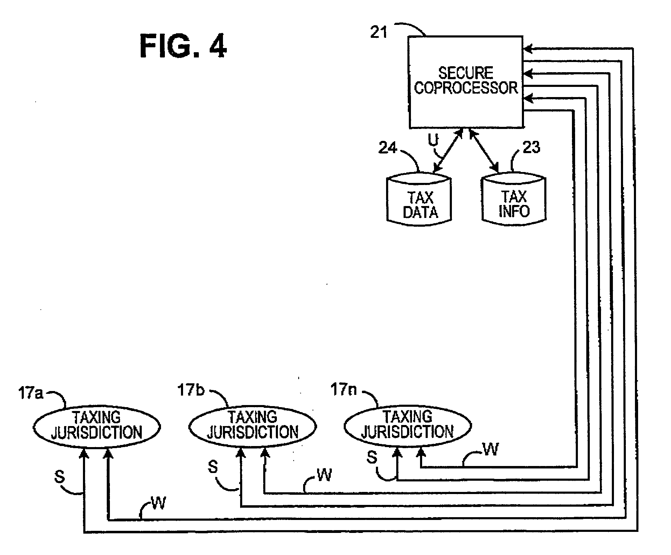

Fig. 4 is a drawing describing the process shown in Fig. 3. A taxing jurisdiction, 17a, 17b,...17n requests detailed transaction records for a particular seller from secure coprocessor 21 via S. The taxing jurisdiction interrogates secure coprocessor 21 to ensure that the coprocessor is functioning properly. If taxing jurisdictions 17a, 17b,...17n determine that secure coprocessor 21 is not functioning properly, a taxing jurisdiction may instruct secure coprocessor 21 to "shut down" until any problems can be resolved. A taxing jurisdiction may also initiate any updates that may need to take place (e.g., software revisions or tax table updates) at this time. A taxing jurisdiction also requests detailed transaction records from secure coprocessor 21 for the taxing jurisdiction.

Secure coprocessor 21 verifies the integrity of the tax data in tax data database 24 via U using digital signature verification and by comparing the tax data with the aggregate totals stored in the secure coprocessor 21. Secure coprocessor 21 also extracts the requested detailed transaction records from the tax data database 24. The secure coprocessor 21 encrypts the detailed transaction records for the taxing jurisdiction 17a, 17b,...17n, (e.g., according to the Public Key Cryptographic System (PKCS) #1 standard). This ensures that electronic snoopers will not be able to read the detailed transaction records. Now, secure coprocessor 21 sends the encrypted detail transaction records to the taxing jurisdiction 17a, 17b,..... 17n via W, Optionally, secure coprocessor 21 may notify seller 12 that the above records are being examined. Furthermore, secure co-processor 21 may allow seller to review and approve transaction records for a given period before they are sent. Taxing jurisdiction 17a decrypts the detailed transaction records and may perform a more detailed analysis of the records.

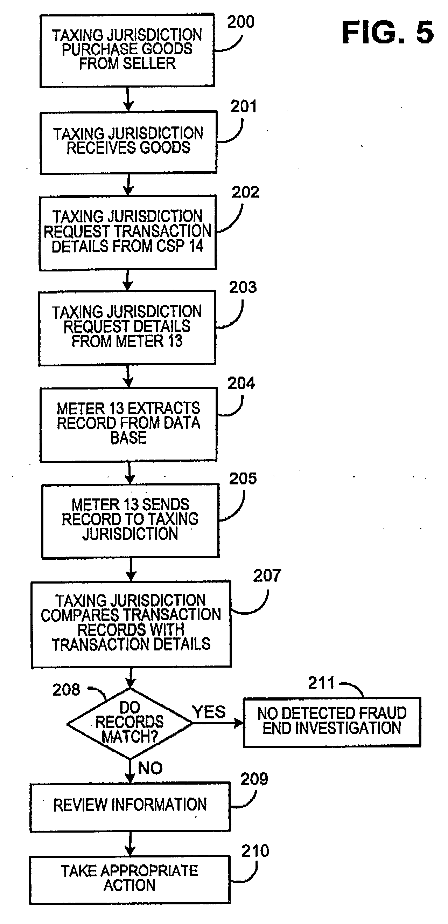

Fig. 5 is a flow chart showing how a taxing jurisdiction may detect fraud and obtain evidence regarding fraudulent transactions. An investigation for the commission of fraud and/or improper seller behavior to a taxing jurisdiction 17a, 7b,...17n may be detected by a number of methods. For instance, the seller's data may be analyzed to identify the retailer trends, i.e., a drop-off in the frequency and/or number of sales, noticing an ordinate number of canceled transactions or returned items. This trend data may be based upon a single seller or may include data from other similar retailers. The investigation begins when a specific taxing jurisdiction, i.e., 17a, purchases goods and/or services from a seller in step 200. Taxing jurisdiction 17a, will record the transaction identification number and other details regarding the above purchase. Taxing jurisdiction 17a may utilize an agent to purchase the goods and/or services and/or use an alias to purchase the goods and/or services. Taxing jurisdiction 17a will receive the purchased goods and/or services in step 201. In step 202, taxing jurisdiction 17a will request transaction details of the aforementioned purchase from meter 13. Then, in step 203, a taxing jurisdiction requests transaction details for the above purchase from meter 13. Now meter 13 will extract transaction records of the purchase from its database in step 204.

At this point in step 205, meter 13 sends the appropriate record to a taxing jurisdiction. The above record may be encrypted for taxing jurisdiction 17a by using the public key of taxing jurisdiction 17a, so that an electronic snooper cannot view the above record. Then, in step 207, taxing jurisdiction 17a compares the record produced by meter 13 with the information regarding the purchase that taxing jurisdiction obtained in step 200. In step 208, taxing jurisdiction 17a determines whether or not the record produced by meter 13 matches the information regarding the purchase that taxing jurisdiction obtained in step 200. If the record produced by meter 13 matches the information regarding the purchase that taxing jurisdiction made in step 200, the seller did not commit any improper behavior for the investigated transaction. If no improper seller behavior was detected, step 211 will be the next step. In step 211, the investigation ends. On the other hand, if taxing jurisdiction 17a determines in step 208 that the record produced by meter 13 does not match the information regarding the purchase that taxing jurisdiction made in step 200, or if no record exists, the seller may have committed improper behavior for the investigated transaction, e.g., by not confirming the completion of the transaction to meter 13, or by the sale amount reported to meter 13 and collecting on the original total. Then, in step 209, taxing jurisdiction 17a will review all the information it has obtained for the investigated transaction, i.e., credit card statement, receipts from transaction, records of transaction, etc. If discrepancies are observed in step 209, the next step will be step 210. In step 210, taxing jurisdiction 17a may determine to expand the investigation of seller 12, conduct a full on-site audit of seller 12, audit all seller 12 transactions, and/or use the information obtained in this investigation as evidence in a legal proceeding against seller 12.

The above specification describes a new and improved method for taxing jurisdictions to collect sales and/or use taxes from Internet and catalog sales. It is realized that the above description may indicate to those skilled in the art additional ways in which the principals of this invention may be used without departing from the spirit. Therefore, it is intended that this invention be limited only by the scope of the appended claims.

## Claims

1. A method for collecting sales and/or use taxes on remote sales, said method includes the steps of:
a) collecting by sellers information regarding remote sales made by buyers;
b) calculating by sellers securely the correct taxing jurisdictions sales and/or use tax to be paid by buyers for remote sales;
c) collecting by sellers from buyers the correct sales and/or use tax;
d) transmitting by a seller to a taxing jurisdiction the aggregate totals of sales and use tax transactions; and
e) paying by a seller to a taxing jurisdiction the correct sales and/or use tax received by sellers.

2. The method claimed in claim 1, further including the step of: transmitting from the seller to the taxing jurisdiction a log of all sales and use tax transactions.

3. The method claimed in claim 2, wherein a seller is given notice that a taxing jurisdiction is studying its log of all sales and use tax transactions.

4. The method claimed in claim 1, further including the step of:
reporting to the taxing jurisdictions the taxes that have been collected.

5. The method claimed in claim 1, further including the step of:
filing tax returns for sellers with the taxing jurisdictions for the taxes that have been collected.

6. The method claimed in claim 1, further including the step of: identifying potentially seller fraudulent behavior by running various checks of the segmented information.

7. The method claimed in claim 6, further including the step of; identifying a strange drop-off in the number of seller transactions in the segmented information.

8. The method claimed in claim 6, further including the step of: examining the history of seller transactions in the segmented account to determine seller trends.

9. The method claimed in claim 6, further including the step of; comparing the transaction volume, dollar volume and transaction types relative to other similar sellers.

10. The method claimed in claim 6, further including the step of: identifying patterns that indicate that a seller may not be reporting the entire amount of taxes collected.
